# EUROPÄISCHE PATENTANMELDUNG

(11) **EP 4 086 106 A1**
(43) Veröffentlichungstag der Anmeldung: **09.11.2022**
(21) Anmeldenummer: 22167172.0
(22) Anmeldetag: 07.04.2022
(51) Int. Cl.: B60L 50/75, B60L 58/30, H01M 8/18

(54) **SCHIENENFAHRZEUG MIT REVERSIBLEM BRENNSTOFFZELLENSYSTEM**

(30) Priorität: 05.05.2021 DE 102021204508
(71) Anmelder: Siemens Mobility GmbH, 81739 München (DE)
(72) Erfinder: Peymandar, De-Niang Maria, 41199 Mönchengladbach (DE)

(57) **Zusammenfassung**

Ein Schienenfahrzeug ist mit einem Brennstoffzellensystem ausgestattet, das eine reversible Brennstoffzelle oder eine Brennstoffzelle und eine Elektrolyseeinheit umfasst. Auf elektrifizierten Streckenabschnitten kann das System im Elektrolysemodus arbeiten.

## Beschreibung

Die Erfindung betrifft ein Schienenfahrzeug mit einem Brennstoffzellensystem für dessen Antrieb sowie ein Verfahren zum Betreiben des Brennstoffzellensystem.

Schienenfahrzeuge werden häufig mit einem elektrischen Antrieb ausgestattet und im Betrieb mittels einer Oberleitung oder Stromschiene mit der notwendigen elektrischen Energie versorgt. Da nicht alle Strecken elektrifiziert sind, also die benötigte Energiequelle nicht zur Verfügung steht, werden auf solchen nicht- oder teilelektrifizierten Strecken oder Streckenabschnitten oft weiterhin dieselbetriebene Schienenfahrzeuge eingesetzt.

Anstelle des umweltschädlichen Verbrennungsmaschinenantriebs können auf solchen Strecken auch Schienenfahrzeuge mit Elektromotor eingesetzt werden, wenn sie mit einem elektrischen Energiespeicher, einer sogenannten Traktionsbatterie, ausgerüstet werden. Eine Traktionsbatterie ist also ein Akkumulator, und mit der gespeicherten Energie kann eine bestimmte Strecke auch ohne externe Energiezufuhr zurückgelegt werden. Die Traktionsbatterie kann dann auf elektrifizierten Streckenabschnitten oder während eines fahrplanmäßigen Halts in einem Bahnhof wieder aufgeladen werden.

Für den Einsatz über längere Strecken und insbesondere im Fernverkehr mit größeren Distanzen zwischen Haltestellen ist die Ausrüstung von Schienenfahrzeugen mit Traktionsbatterien weniger geeignet, da die in diesen speicherbare elektrische Energie zu gering ist bzw. Gewicht und Größe der hierfür erforderlichen Energiespeicher die Kapazität des Schienenfahrzeugs übersteigen würden.

Daher wird vor allem im Fernverkehr der Einsatz von Brennstoffzellensystemen als Alternative zu Traktionsbatterien als sinnvoll erachtet. Brennstoffzellen erzeugen mittels eines elektro-chemischen Prozesses aus einem Brennstoff elektrische Energie, mit der der Antrieb, aber auch andere Einrichtungen des Schienenfahrzeugs betrieben werden können. Die Traktionsbatterie kann dann eine deutlich geringere Speicherkapazität haben und dadurch kleiner und leichter sein. Auf der anderen Seite benötigt ein Brennstoffzellensystem zusätzliche Komponenten, u.a. einen Tank für den Brennstoff. Für Schienenfahrzeuge wird eine Niedertemperatur-Polymer-Elektrolyt-Brennstoffzelle, die als Brennstoff reinen Wasserstoff benötigt, als besonders geeignet angesehen. Dies bedeutet, dass das Schienenfahrzeug mit einem sehr großen Wasserstofftank, der aufgrund der Explosionsgefahr von Wasserstoff entsprechend konstruiert sein muss, ausgerüstet werden muss. Ferner sind die Kosten für Wasserstoff sehr hoch. Als weitere Ausgangssubstanz wird Sauerstoff benötigt, der ebenfalls aus einem Tank oder aus der Luft zugeführt werden kann.

Die Erfindung hat zur Aufgabe, ein Schienenfahrzeug anzugeben, das für den Einsatz auf längeren nichtelektrifizierten Strecken geeignet ist, sowie kostengünstig und umweltfreundlich im Betrieb ist. Eine weitere Aufgabe ist die Angabe eines Verfahrens zum Betreiben des Schienenfahrzeugs.

Diese Aufgabe wird durch ein Schienenfahrzeug mit den Merkmalen des Patentanspruchs 1 und ein Verfahren mit den Merkmalen das Patentanspruchs 8 gelöst. Vorteilhafte Weiterbildungen sind Gegenstand von Unteransprüchen.

Die Erfindung setzt ein Brennstoffzellensystem mit reversibler Arbeitsweise, auch bezeichnet als reversibles Brennstoffzellensystem, ein. Reversibel bedeutet, dass das System in zwei Modi betrieben werden kann:
Zum einen kann das System in einem Stromerzeugungsmodus arbeiten, in dem Wasserstoff und Sauerstoff in die Brennstoffzelle gespeist werden und Strom erzeugt wird, der in einer elektrischen Speichereinheit, insbesondere in einer Traktionsbatterie, gespeichert wird und zum Antrieb und ggf. für andere Aufgaben zur Verfügung steht. Das entstehende Produktwasser wird in einem Wassertank gespeichert.

Zum anderen kann das System in einem Elektrolysemodus arbeiten, in dem Wasser aus dem Wassertank elektrolytisch in Wasserstoff und Sauerstoff zerlegt wird, dabei wird elektrische Energie aus der elektrischen Speichereinheit in chemische Energie umgewandelt. Der entstehende Wasserstoff wird in einen Wasserstofftank des Schienenfahrzeugs gespeist und steht für einen späteren Stromerzeugungsbetrieb wieder zur Verfügung. Der entstehende Sauerstoff kann in einem Sauerstofftank gespeichert werden oder in die Umgebung abgegeben werden.

Die Erfindung nutzt die Erkenntnis, dass im Schienenverkehr insbesondere die Strecken bekannt sind, auf denen das Schienenfahrzeug verkehrt, und ebenso weitere daraus resultierende Randbedingungen, die für das Energieversorgungssystem des Schienenfahrzeugs wichtig sind. Mit anderen Worten, es sind Streckendaten vor dem Befahren der Strecken bekannt. Dies gilt umso mehr, als der Einsatzzweck und die zu befahrenden Strecken bereits beim Bau des Schienenfahrzeugs berücksichtigt werden, da es üblicherweise nach Kundenvorgaben gefertigt wird. Daher ist auch bekannt, welche Abschnitte elektrifiziert sind, welche Mengen Wasserstoff für die Befahrung von nicht-elektrifizierten Streckenabschnitten benötigt werden, welche Abschnitte mit Brennstoffzellenantrieb gefahren werden können oder müssen, welche Menge an Produktwasser dabei entsteht und später wieder für einen Elektrolyse-Betrieb zur Verfügung steht etc. Die Produktion von elektrischer Energie und Wasserstoff kann den bekannten Streckendaten angepasst werden. Es können also Streckendaten für die Steuerung des Brennstoffzellensystems und seines Betriebs, insbesondere seiner Betriebsmodi, verwendet werden. Ferner kann das Brennstoffzellensystem entsprechend der bekannten Randbedingungen bzw. Streckendaten dimensioniert werden. Dies ist besonders beim Einsatz eines reversiblen Brennstoffzellensystems vorteilhaft, da sonst falsch - nämlich unnötig groß - dimensionierte Wasserstofftanks oder Wassertanks so viel Platz oder Gewicht beanspruchen, dass der Einsatz der Technologie nicht wirtschaftlich ist. Gleiches gilt für den elektrischen Energiespeicher bzw. die Traktionsbatterie. Die Erfindung ermöglicht die Verwendung kleinerer Tanks und kleinerer Energiespeicher, ohne dass die Gefahr einer unzureichenden Energieversorgung besteht.

Das Brennstoffzellensystem kann eine sogenannte reversible Brennstoffzelle aufweisen, die in beiden Modi arbeiten kann. Alternativ kann das Brennstoffzellensystem eine Brennstoffzelle und eine davon getrennte Elektrolyseeinheit (sogenannter Elektrolyseur) aufweisen, in diesem Fall arbeiten Brennstoffzelle und Elektrolyseur im Wesentlichen abwechselnd. Die grundsätzliche Arbeitsweise solcher Systeme ist beispielsweise aus dem Review-Artikel "A review of unitized regenerative fuel cell stack: Material, design and research achievements, Gabbasa et al., International Journal of hydrogen energy 39 (2014) 17765-17778, bekannt.

Für den erstgenannten Konfigurationstyp ist eine Niedertemperatur-Polymer-Elektrolyt-Brennstoffzelle (Niedertemperatur-PEM) geeignet, da sie eine hohe Leistungsdichte aufweist, die den hohen Anforderungen im Schienenverkehr genügt. Eine Niedertemperatur-PEM kann als reversible Brennstoffzelle betrieben werden. Eine andere geeignete Brennstoffzelle ist eine Solid Oxide Fuel Cell (SOFC), die bei Betriebstemperaturen von ca. 700°C bis 1000°C arbeitet und die bei reversibel arbeitender Ausbildung auch als SOEC (Solid Oxide Electrolyse Cell) bezeichnet wird.

Für den zweitgenannten Konfigurationstyp ist insbesondere eine Niedertemperatur-PEM geeignet.

Gemäß einer Ausführungsform wird als Wassertank für das bei der Stromerzeugung gebildete Produktwasser der im Schienenfahrzeug ohnehin vorhandene Vorratswassertank für Frischwasser oder ein mit diesem verbundenen Wassertank verwendet. Da bei einem Schienenfahrzeug ein meist sehr großer Vorratswassertank für sanitäre Einrichtungen oder Küche sowieso vorhanden ist, kann dadurch sehr viel Bauraum und Gewicht eingespart werden.

Das erfindungsgemäße Verfahren sieht vor, ein Schienenfahrzeug mit einem reversiblen Brennstoffzellensystem zu betreiben, wobei das reversible Brennstoffzellensystem insbesondere phasenweise im Stromerzeugungsmodus und phasenweise im Elektrolysemodus betrieben wird. Das Brennstoffzellensystem umfasst dabei eine reversible Brennstoffzelle oder eine Brennstoffzelle und eine damit gekoppelte Elektrolyseeinheit.

Vorzugsweise arbeitet das reversible Brennstoffzellensystem auf einem nicht-elektrifizierten Streckenabschnitt in Stromerzeugungsmodus und lädt dabei die Traktionsbatterie auf.

Gemäß einer Ausführungsform wird das System im Elektrolysemodus betrieben, wenn das Schienenfahrzeug einen elektrifizierten Streckenabschnitt befährt. Die von einer externen Energiequelle wie beispielsweise einer Oberleitung oder einer Stromschiene gelieferte Energie wird für das Laden des Energiespeichers bzw. der Traktionsbatterie und für den Elektrolysemodus des Brennstoffzellensystems genutzt. Es arbeitet also die reversible Brennstoffzelle oder der Elektrolyseur des Systems im Elektrolysemodus und erzeugt Wasserstoff, das in einem Wasserstofftank gespeichert wird.

Alternativ oder zusätzlich wird das System im Elektrolysemodus betrieben, wenn das Schienenfahrzeug an einer Haltestelle mit Ladeinfrastruktur hält. Die Ladeinfrastruktur kann eine Oberleitung oder Stromschiene umfassen oder eine andere Art der Verbindung mit einer an der Haltestelle vorhandenen elektrischen Energieversorgung.

Die Erfindung wird im Folgenden anhand von Ausführungsbeispielen näher erläutert. Es zeigen in schematischer Darstellung
- Fig.1: ein erstes Ausführungsbeispiel eines erfindungsgemäßen Brennstoffzellensystems
- Fig.2: ein zweites Ausführungsbeispiel eines erfindungsgemäßen Brennstoffzellensystems

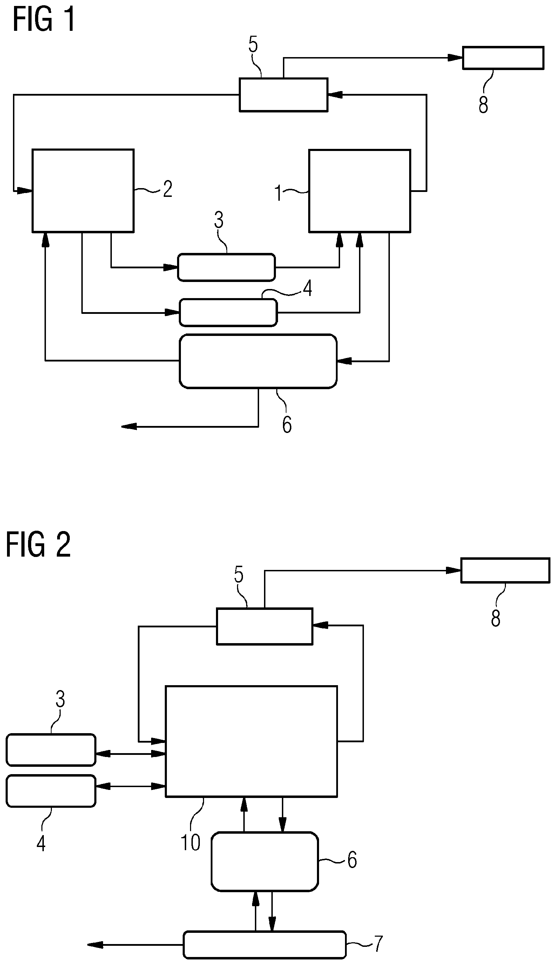

In Figur 1 ist schematisch die Struktur eines reversiblen Brennstoffzellensystems mit einer Brennstoffzelle 1 und einem davon getrennten Elektrolyseur 2 dargestellt. Der Brennstoffzelle 1 werden Wasserstoff aus einem Wasserstofftank 3 und Sauerstoff aus einem Sauerstofftank 4 zugeführt. Wenn die Brennstoffzelle 1 im Stromerzeugungsmodus arbeitet, wird entstehendes Produktwasser in einen Wassertank 6 geleitet, der geleichzeitig ein Frischwasser-Vorratswassertank eines Schienenfahrzeugs ist. Das Wasser aus dem Wassertank kann dann an nicht näher dargestellte Verbraucher geleitet werden.

Ferner ist die Brennstoffzelle mit einer Traktionsbatterie 5 verbunden, an die sie im Stromerzeugungsmodus Strom liefert. Die Traktionsbatterie 5 ist mit weiteren elektrischen Komponenten 8 des Schienenfahrzeugs, insbesondere einem Antrieb, verbunden. Eine nicht näher dargestellte Steuereinheit ist mit dem Brennstoffzellensystem gekoppelt und dient der Steuerung des gesamten Systems und insbesondere der Einstellung des jeweiligen Betriebsmodus.

Das Brennstoffzellensystem umfasst ferner den Elektrolyseur 2, der von dem Wassertank 6 gespeist wird und das Wasser in Wasserstoff und Sauerstoff elektrolytisch zerlegt. Der gebildete Wasserstoff wird in den Wasserstofftank 3 geleitet, der gebildete Sauerstoff in den Sauerstofftank 4. Alternativ kann der Sauerstoff in die Umgebungsluft entweichen und bei der Stromerzeugung aus der Umgebungsluft geliefert werden, so dass auf den Sauerstofftank 4 verzichtet werden kann. Die für die Elektrolyse benötigte elektrische Energie wird von der Traktionsbatterie 5 geliefert.

Die in Figur 2 dargestellte Ausführungsform unterscheidet sich von der nach Figur 1 dadurch, dass anstelle der Brennstoffzelle und des Elektrolyseurs eine reversible Brennstoffzelle 10 im Brennstoffzellensystem vorhanden ist, die sowohl im Stromerzeugungsmodus als auch im Elektrolysemodus betrieben werden kann. Ferner ist der Wassertank 6 für das Produktwasser getrennt vom Vorratswassertank 7 für die Frischwasserversorgung des Schienenfahrzeugs, aber mit diesem verbunden. Die reversible Brennstoffzelle ist mit dem Wasserstofftank 3, dem Sauerstofftank 4, der Traktionsbatterie 5 und dem Wassertank 6 verbunden.

Ein Schienenfahrzeug mit dem Brennstoffzellensystem gemäß Figur 1 oder Figur 2 kann bei Befahren von nicht-elektrifizierten Streckenabschnitten im Stromerzeugungsmodus betrieben werden und so die Traktionsbatterie mit elektrischer Energie versorgen. In elektrifizierten Streckenabschnitten kann die externe Energieversorgung für den Antrieb genutzt werden. Zusätzlich kann die Traktionsbatterie aufgeladen werden und, wenn diese ausreichend geladen ist, kann außerdem das Brennstoffzellensystem im Elektrolysemodus betrieben werden. Aufladen und Elektrolyse-betrieb sind außerdem an Bahnhöfen oder anderen Haltestellen mit entsprechender Infrastruktur möglich. Da die zu befahrenden Strecken bekannt sind, ist auch die mögliche Sequenz der Betriebsmodi bekannt sowie die benötige Menge der Ausgangssubstanzen. Der Wasserstofftank und der Wassertank sowie ggf. der Sauerstofftank können entsprechend dimensioniert werden. Ferner kann die Sequenz der Betriebsmodi auch auf die Strecke abgestimmt werden, beispielsweise kann der Elektrolysebetrieb auch bei vorhandener externer Energieversorgung beendet werden, wenn bekannt ist, dass für spätere nicht-elektrifizierte Streckenabschnitte bereits genügend Wasserstoff vorhanden ist, oder dass an einem nachfolgenden Bahnhof der Elektrolysebetrieb besser möglich ist. Durch die bekannten Streckendaten kann die Produktion von elektrischer Energie und Wasserstoff optimal angepasst werden.

Insgesamt ergeben sich durch die Erfindung insbesondere Einsparungen an Bauraum und Gewicht sowie an Kosten für Wasserstoff und Wasserstoff-Tanksystem. Ein zusätzlicher Zeitvorteil ergibt sich, wenn das Brennstoffzellensystem auf elektrifizierten Streckenabschnitten, also während der Fahrt, im Elektrolysemodus arbeitet.

## Patentansprüche

1. Schienenfahrzeug mit einem Brennstoffzellensystem für dessen Antrieb, **dadurch gekennzeichnet, dass**
das Brennstoffzellensystem als reversibles Brennstoffzellensystem ausgebildet ist.

2. Schienenfahrzeug nach dem vorherigen Anspruch, **dadurch gekennzeichnet, dass**
das Brennstoffzellensystem eine reversible Brennstoffzelle (10) umfasst.

3. Schienenfahrzeug nach einem der vorherigen Ansprüche,
**dadurch gekennzeichnet, dass**
das Brennstoffzellensystem eine Brennstoffzelle (1) und eine damit gekoppelte Elektrolyseeinheit (2) umfasst.

4. Schienenfahrzeug nach einem der vorherigen Ansprüche,
**dadurch gekennzeichnet, dass**
ein Wassertank (6) für Produktwasser vorgesehen ist, der als Frischwasser-Vorratstank des Schienenfahrzeugs dient oder mit diesem (7) gekoppelt ist.

5. Schienenfahrzeug nach einem der vorherigen Ansprüche,
**dadurch gekennzeichnet,**
**dass** die reversible Brennstoffzelle (1) eine Niedertemperatur-Polymer-Elektrolyt-Brennstoffzelle oder eine Solid Oxide Fuel Cell ist.

6. Schienenfahrzeug nach einem der vorherigen Ansprüche,
**dadurch gekennzeichnet, dass**
die Größe des Wassertanks (6) und/oder des Wasserstofftanks (3) entsprechend des anhand von Streckendaten bestimmten Bedarfs ausgebildet ist.

7. Schienenfahrzeug nach einem der vorherigen Ansprüche,
**dadurch gekennzeichnet,**
**dass** das Brennstoffzellensystem ausgebildet ist, bei Anschluss an eine außerhalb des Schienenfahrzeugs befindliche elektrische Energiequelle, insbesondere an eine Oberleitung und/oder an eine Ladeinfrastruktur an einer Haltestelle, im Elektrolysemodus zu arbeiten.

8. Verfahren zum Betreiben eines Brennstoffzellensystems in einem Schienenfahrzeug,
wobei das Brennstoffzellensystem eine reversible Brennstoffzelle (10) oder eine Brennstoffzelle (1) und eine damit gekoppelte Elektrolyseeinheit (2) aufweist,
und bei dem das Brennstoffzellensystem phasenweise im Elektrolysemodus und phasenweise im Stromerzeugungsmodus arbeitet.

9. Verfahren nach einem der vorherigen Ansprüche, **dadurch gekennzeichnet,**
**dass** im Stromerzeugungsmodus eine Traktionsbatterie (5) des Schienenfahrzeugs geladen wird.

10. Verfahren nach einem der vorherigen Ansprüche, **dadurch gekennzeichnet, dass**
als Tank (6) für Produktwasser ein im Schienenfahrzeug vorhandener Vorratstank für Frischwasser oder ein mit diesem verbundener Wassertank verwendet wird.

11. Verfahren nach einem der vorherigen Ansprüche, **dadurch gekennzeichnet, dass**
das Brennstoffzellensystem im Elektrolysemodus arbeitet, während das Schienenfahrzeug einen elektrifizierten Streckenabschnitt befährt.

12. Verfahren nach einem der vorherigen Ansprüche, **dadurch gekennzeichnet, dass**
das Brennstoffzellensystem im Elektrolysemodus arbeitet, während sich das Schienenfahrzeug an einer Haltestelle aufhält.

13. Verfahren nach einem der vorherigen Ansprüche, **dadurch gekennzeichnet, dass**
für die Steuerung des Betriebs Streckendaten der zu befahrenden Strecke verwendet werden.
